# EUROPEAN PATENT APPLICATION

(11) **EP 4 836 075 A1**
(43) Date of publication of application: **04.11.2026**
(21) Application number: 24938450.4
(22) Date of filing: 12.08.2024
(51) Int. Cl.: H01M 10/48, H01M 10/058

(54) **BATTERY CELL, BATTERY, AND ELECTRICAL APPARATUS**

(30) Priority: 13.05.2024 CN 202421030102 U
(71) Applicant: Contemporary Amperex Technology Co., Limited, Ningde, Fujian 352100 (CN)
(72) Inventor: DONG, Junjun, Ningde, Fujian 352100 (CN); ZHANG, Jijun, Ningde, Fujian 352100 (CN); CHA, Xinggui, Ningde, Fujian 352100 (CN); WANG, Shaofei, Ningde, Fujian 352100 (CN); WEI, Yimin, Ningde, Fujian 352100 (CN)
(74) Representative: Lorenz Seidler Gossel Part. mbB
(86) International application number: PCT/CN2024/111489
(87) International publication number: WO 2025/236436

(57) **Abstract**

The present application discloses a battery cell, a battery, and an electrical apparatus. The battery cell provided in the present application comprises a casing, a detection element, and a transmission element. The casing comprises a wall part. The detection element comprises a mounting housing and a sensor, the mounting housing penetrates through the wall part, the sensor is mounted within the mounting housing, and the sensor is used for acquiring battery data. The transmission element is located outside of the casing, the transmission element is connected to the detection element, and the transmission element is used for receiving and transmitting the battery data. Thus, the detection element penetrates through the wall part, and the detection element is exposed in the interior of the casing, facilitating acquisition of the battery data by the detection element. At the same time, the detection element is further exposed out of the casing, facilitating connection of the detection element to the transmission element, thereby facilitating transmission by the transmission element of the battery data acquired by the detection element. Compared with other types of battery cells, the battery cell of the present application has a simple structure, and transmitting the battery data is more convenient.

## Description

The present application claims priority to the Chinese patent application with application number 2024210301023, filed on May 13, 2024 and entitled "BATTERY CELL, BATTERY, AND ELECTRIC APPARATUS", which is incorporated herein by reference in its entirety.

### TECHNICAL FIELD

The present application relates to the field of battery technology, and in particular, to a battery cell, a battery, and an electric apparatus.

### BACKGROUND

Energy conservation and emission reduction are the key to sustainable development, which also promotes the adjustment of energy structure and drives the development and application of battery technology. The key to the development of battery technology lies in electrochemical energy storage technology. Due to its advantages of high energy density, good cycling performance, high operating voltage, environmental friendliness, and low self-discharge, it has been widely used in portable electronics, electric vehicles, and energy storage systems.

During use of a battery, it is necessary to collect and monitor the working state of the battery through a detection element. However, the existing battery detection element has a complex structure and poor reliability, and it is difficult to transmit the collected battery data.

### SUMMARY

The main purpose of the present application is to provide a battery cell, a battery, and an electric apparatus, aiming to solve the above technical problems existing in the prior art.

To solve the above problems, the present application provides a battery cell. The battery cell includes a housing, a detection element, and a transmission element. The housing includes a wall portion. The detection element includes a mounting shell and a sensor. The mounting shell runs through the wall portion. The sensor is mounted in the mounting shell. The sensor is configured to collect battery data. The transmission element is located outside the housing. The transmission element is connected to the detection element. The transmission element is configured to receive and transmit the battery data. Thus, by mounting the sensor in the mounting shell, the mounting shell can provide better protection for the sensor. The detection element can run through the wall portion via the mounting shell, thereby improving the stability of the mounting of the detection element. The detection element is also exposed outside the housing to facilitate the connection between the detection element and the transmission element, thereby helping the transmission element to transmit the battery data collected by the detection element.

In some embodiments, the battery cell further includes a pole disposed on the wall portion, and both the detection element and the transmission element are electrically connected to the pole. Thus, the pole can supply power to the detection element and the transmission element without the need for external power supply, thereby reducing the complexity of the power supply mode.

In some embodiments, the battery cell further includes a wire. The transmission element is electrically connected to the pole through the wire, and the transmission element is electrically connected to the detection element. Thus, the pole can supply power to the transmission element through the wire and supply power to the detection element through the transmission element, thereby reducing the complexity of the wire harness.

In some embodiments, the pole includes a first pole and a second pole with opposite polarities. The first pole and the second pole are spaced apart. The wire includes a first wire and a second wire. The first wire connects the transmission element and the first pole. The second wire connects the transmission element and the second pole. Thus, it is convenient for the first pole and the second pole to supply power to the transmission element through the first wire and the second wire, which reduces the complexity of the wire harness.

In some embodiments, the detection element and the transmission element are located between the first pole and the second pole. Thus, the extension length of the first wire and the second wire can be reduced, production costs can be reduced, and the complexity of the wire harness can be reduced.

In some embodiments, a height by which the detection element protrudes from the wall portion outside the housing is lower than a height by which the pole protrudes from the wall portion outside the housing. Thus, it is convenient to reduce the overall size of the battery cell, reduce the influence of the detection element on the interaction between the battery cell and other components, and enable the battery cell to be adapted to more application scenarios.

In some embodiments, the detection element includes a conductive member. The conductive member is connected to the side of the mounting shell facing the outside of the housing. The transmission element is connected to the conductive member. Thus, the detection element can be electrically connected to the transmission element through the conductive member, thereby improving the stability of the connection between the detection element and the transmission element.

In some embodiments, the mounting shell has an accommodating groove. The notch of the accommodating groove faces the inside of the housing. The sensor is located in the accommodating groove. The detection element further includes a diaphragm. The diaphragm blocks the notch of the accommodating groove. Thus, the cooperation of the accommodating groove and the diaphragm can provide support for the sensor. At the same time, the accommodating groove and the diaphragm can protect the sensor, thereby reducing the risk of damaging the sensor.

In some embodiments, the sensor includes a temperature sensor and/or a pressure sensor. Thus, the temperature and/or pressure data of the battery cell can be detected through the sensor.

In some embodiments, the mounting shell includes a main body portion and a first flange portion. The main body portion runs through the wall portion. The first flange portion is located outside the housing and is connected to the main body portion. The first flange portion is spaced apart from the wall portion. The battery cell further includes a buckle member. The radial dimension of the first flange portion is larger than the radial dimension of the main body portion. The buckle member is clamped between the first flange portion and the wall portion. Thus, the first flange portion can be clamped to the wall portion through the buckle member, thereby helping the main body portion to run through the wall portion and facilitating the disassembly of the main body portion and the wall portion, thereby improving the stability of the mounting and fixation of the main body portion and the wall portion.

In some embodiments, the mounting shell includes a second flange portion. The second flange portion is in the housing and is connected to the main body portion. The radial dimension of the second flange portion is larger than the radial dimension of the main body portion. The second flange portion abuts against the wall portion. Thus, the second flange portion can be clamped to the side of the wall portion close to the inside of the housing, further improving the stability of the mounting and fixation of the main body portion and the wall portion.

In some embodiments, the battery cell further includes a sealing ring. The sealing ring surrounds the main body portion. The sealing ring is sandwiched between the wall portion and the second flange portion. Thus, the sealing ring can seal the space between the wall portion and the second flange portion, isolating the internal environment of the battery cell from the external environment.

In some embodiments, the housing includes a housing body and an end cover. The end cover covers an open end of the housing body. The detection element runs through the end cover. Thus, the end cover can cooperate with the housing body to isolate the internal environment of the battery cell from the external environment. At the same time, the detection element runs through the end cover, which facilitates the mounting and fixation of the detection element.

In some embodiments, the end cover is provided with an electrolyte injection hole. The electrolyte injection hole is spaced apart from the detection element. Thus, electrolyte can be injected into the battery cell through the electrolyte injection hole, facilitating the replenishment of electrolyte into the interior of the housing.

To solve the above problems, the present application provides a battery. The battery includes the above battery cell.

In some embodiments, the battery includes a battery management system. The battery management system is in communication connection with the transmission element. Thus, the battery management system can provide control signals for the transmission element and the detection element, so that the detection element can detect the state of the battery unit, and the working state of the battery unit can be managed in a targeted manner according to the battery data transmitted by the transmission element.

To solve the above problems, the present application also provides an electric apparatus. The electric apparatus includes the above battery.

### BRIEF DESCRIPTION OF DRAWINGS

In order to more clearly illustrate the technical solutions in the embodiments of the present application or in the prior art, the drawings required for use in the embodiments will be briefly introduced below. Obviously, the drawings in the following description are only some embodiments of the present application. For those of ordinary skill in the art, other drawings can also be obtained according to these drawings without creative effort.
FIG. 1 is a schematic structural diagram of a vehicle according to one or more embodiments of the present application;
FIG. 2 is a schematic exploded structural diagram of a battery according to one or more embodiments of the present application;
FIG. 3 is a schematic exploded structural diagram of a battery cell according to one or more embodiments of the present application;
FIG. 4 is a schematic partial structural diagram of a battery cell from a first perspective according to one or more embodiments of the present application;
FIG. 5 is a schematic partial structural diagram of a battery cell from a second perspective according to one or more embodiments of the present application;
FIG. 6 is a schematic partial structural diagram of a battery cell from a third perspective according to one or more embodiments of the present application;
FIG. 7 is a cross-sectional view of the schematic partial structural diagram of the battery cell shown in FIG. 4 taken along A-A direction;
FIG. 8 is an enlarged schematic diagram of a structure within a dashed box in the cross-sectional view shown in FIG. 7; and
FIG. 9 is a schematic structural diagram of a battery according to one or more embodiments of the present application.

Reference signs: vehicle 1; battery 2; controller 3; motor 4; box 20; first part 21; second part 22; battery cell 10; housing 100; wall portion 110; housing body 120; end cover 130; detection element 200; mounting shell 210; accommodating groove 211; main body portion 212; first flange portion 213; second flange portion 214; sensor 220; conductive member 230; diaphragm 240; transmission element 300; pole 400; first pole 410; second pole 420; wire 500; first wire 510; second wire 520; buckle member 600; sealing ring 700; electrolyte injection hole 800; and battery management system 900.

### DESCRIPTION OF EMBODIMENTS

The embodiments of the technical solutions of the present application will be described in detail below with reference to the accompanying drawings. The following embodiments are only used to more clearly illustrate the technical solutions of the present application, and are therefore only used as examples, and cannot be used to limit the protection scope of the present application.

Unless otherwise defined, all technical and scientific terms used herein have the same meaning as commonly understood by those skilled in the technical field of the present application; the terms used herein are only for the purpose of describing specific embodiments and are not intended to limit the present application; and the terms "include" and "have" and any variations thereof in the description and claims of the present application and the above description of the drawings are intended to cover non-exclusive inclusion.

In the description of the embodiments of the present application, the technical terms "first", "second", and the like are only used to distinguish different objects, and cannot be understood as indicating or implying relative importance or implicitly indicating the number, specific order, or primary-secondary relationship of the indicated technical features. In the description of the embodiments of the present application, the meaning of "multiple" is two or more, unless otherwise clearly and specifically limited.

The reference to "embodiment" herein means that a specific feature, structure, or characteristic described in conjunction with the embodiment may be included in at least one embodiment of the present application. The appearance of the phrase in various positions in the description does not necessarily refer to the same embodiment, nor is it an independent or alternative embodiment that is mutually exclusive with other embodiments. It is explicitly and implicitly understood by those skilled in the art that the embodiments described herein can be combined with other embodiments.

In the description of the embodiments of the present application, the term "and/or" is only a description of the association relationship of associated objects, indicating that three relationships can exist. For example, A and/or B can mean: A exists alone, A and B exist at the same time, and B exists alone. In addition, the character "/" in this document generally indicates that the associated objects before and after are in an "or" relationship.

In the description of the embodiments of the present application, the term "multiple" refers to two or more (including two). Similarly, "multiple groups" refers to two or more groups (including two groups), and "multiple sheets" refers to two or more sheets (including two sheets).

In the description of the embodiments of the present application, the orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationships shown in the drawings, and are only for the convenience of describing the embodiments of the present application and simplifying the description, and do not indicate or imply that the means or element referred to must have a specific orientation, be constructed and operated in a specific orientation, and therefore cannot be understood as a limitation on the embodiments of the present application.

In the description of the embodiments of the present application, unless otherwise clearly specified and limited, the technical terms "mounting", "connecting", "join", "fixing", and the like should be understood in a broad sense. For example, they may be a fixed connection, a detachable connection, or an integral connection; they may be a mechanical connection or an electrical connection; they may be a direct connection or an indirect connection through an intermediate medium; or they may be the internal communication of two elements or the interaction relationship between two elements. For those of ordinary skill in the art, the specific meanings of the above terms in the embodiments of the present application can be understood according to specific circumstances.

At present, from the perspective of market development, the application of batteries is becoming more and more extensive. Batteries are not only used in energy storage power systems such as hydropower, thermal power, wind power, and solar power stations, but are also widely used in electric transportation vehicles such as electric bicycles, electric motorcycles, and electric vehicles, as well as in many fields such as military equipment and aerospace. As the application field of batteries continues to expand, the market demand is also continuously increasing.

The batteries mentioned in the art can be divided into primary batteries and rechargeable batteries according to whether they can be recharged. Primary batteries (Primary Battery) are also called "use-and-throw" batteries and primary cells. Because after their power is exhausted, they cannot be recharged and can only be discarded. Rechargeable batteries are also called secondary batteries (Secondary Battery) or secondary cells and accumulators. The manufacturing materials and processes of rechargeable batteries are different from those of primary batteries. Their advantage is that they can be recycled multiple times after charging. The output current load capacity of rechargeable batteries is higher than that of most primary batteries. The types of rechargeable batteries currently common are: lead-acid batteries, nickel-metal hydride batteries, and lithium-ion batteries. Lithium-ion batteries have the advantages such as light weight, large capacity (capacity is 1.5 to 2 times that of nickel-metal hydride batteries of the same weight), no memory effect, and have a very low self-discharge rate. Therefore, even if the price is relatively high, they are still widely used. Lithium-ion batteries are also currently widely used in pure electric vehicles and hybrid vehicles. Lithium-ion batteries used for this purpose have relatively slightly lower capacity, but have larger output and charging currents, longer service life, but higher cost.

The battery described in the embodiments of the present application refers to a rechargeable battery or a primary battery. The embodiments disclosed in the present application will be described below mainly by taking a lithium-ion battery as an example. It should be understood that the embodiments disclosed in the present application are applicable to any other suitable type of rechargeable battery. The battery mentioned in the embodiments disclosed in the present application can be directly or indirectly applied to a suitable apparatus to supply power to the device.

The present application provides an electric apparatus. The electric apparatus may include, but is not limited to, a mobile phone, a tablet, a laptop computer, an electric toy, an electric tool, an electric bicycle, an electric vehicle, a ship, and a spacecraft. Electric toys may include fixed or mobile electric toys, such as game consoles, electric car toys, electric boat toys, and electric airplane toys. Spacecraft may include airplanes, rockets, space shuttles, spacecraft, and the like. The electric apparatus may include a battery, and the electric apparatus can provide electrical energy through the battery to realize corresponding functions.

The present application also provides an electric vehicle. The electric vehicle may include a battery.

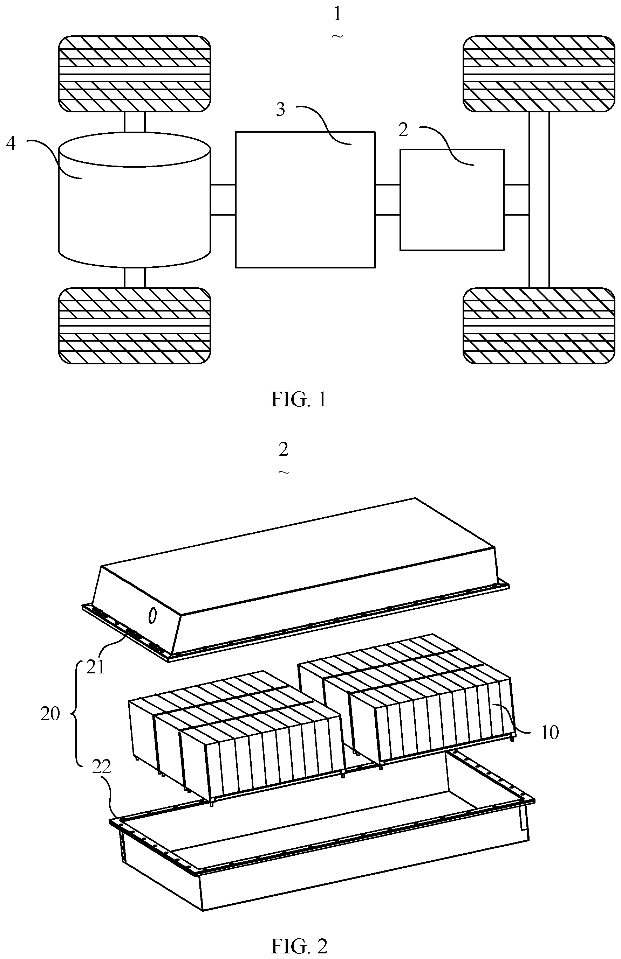

Referring to FIG. 1, FIG. 1 is a schematic structural diagram of a vehicle according to one or more embodiments of the present application.

The vehicle 1 may be a fuel vehicle, a gas vehicle, or a new energy vehicle. The new energy vehicle may be a pure electric vehicle, a hybrid vehicle, an extended-range vehicle, or the like. A battery 2 is provided inside the vehicle 1. The battery 2 may be provided at the bottom, head, or tail of the vehicle 1. The battery 2 may be used to supply power to the vehicle 1. For example, the battery 2 may serve as an operating power source for the vehicle 1. The vehicle 1 may further include a controller 3 and a motor 4. The controller 3 is used to control the battery 2 to supply power to the motor 4, for example, to meet the working power requirements during starting, navigation, and driving of the vehicle 1.

In some embodiments of the present application, the battery 2 can not only serve as an operating power source for the vehicle 1, but can also serve as a driving power source for the vehicle 1, replacing or partially replacing fuel oil or natural gas to provide driving power for the vehicle 1.

In order to improve the performance of the electric apparatus, the present application also provides a battery. Referring to FIG. 2, FIG. 2 is a schematic exploded structural diagram of a battery according to one or more embodiments of the present application.

The shape of the battery 2 may include, but is not limited to, square, cylinder, or any other shape.

In some embodiments, the battery 2 may include a box 20 and a battery cell 10. The battery cell 10 is accommodated in the box 20. The box 20 is configured to provide an accommodation space for the battery cell 10. The box 20 may adopt various structures. In some embodiments, the box 20 may include a first part 21 and a second part 22. The first part 21 and the second part 22 cover each other. The first part 21 and the second part 22 jointly define an accommodation space for accommodating the battery cell 10. The second part 22 may be a hollow structure with one end open. The first part 21 may be a plate-like structure. The first part 21 covers the open side of the second part 22 so that the first part 21 and the second part 22 jointly define the accommodation space. The first part 21 and the second part 22 may also both be hollow structures with one side open. The open side of the first part 21 covers the open side of the second part 22.

In the battery 2, there may be multiple battery cells 10. The multiple battery cells 10 may be connected in series or in parallel or series-parallel. Being connected in series-parallel means that there are both series and parallel connections among the multiple battery cells 10. The multiple battery cells 10 may be directly connected in series or in parallel or in series-parallel, and then the whole formed by the multiple battery cells 10 is accommodated in the box 20. Certainly, the battery 2 may also be formed as follows: multiple battery cells 10 are first connected in series or in parallel or series-parallel to form a battery module, and then multiple battery modules are connected in series or in parallel or in series-parallel to form a whole, which is accommodated in the box 20. The battery 2 may also include other structures. For example, the battery 2 may further include a busbar component for realizing electrical connection between the multiple battery cells 10.

The manufacturing method of the battery cell 10 includes a lamination type and a winding type, that is, the battery cell 10 is divided into two types: laminated battery and wound battery. Laminated batteries have uniform current collection effect, small internal resistance of the battery, and high specific power. However, in order to improve accuracy, the requirements for mold accuracy are extremely high, equipment investment is high, the process is relatively complex, and production efficiency is low. Wound batteries are simple to manufacture, the sheet preparation and assembly process have general requirements for equipment accuracy, production efficiency is high, and the cost is low. In terms of performance, wound batteries have excellent high and low temperature performance, very fast charging, ultra-long service life, stable high output voltage, strong structure, and strong shock resistance.

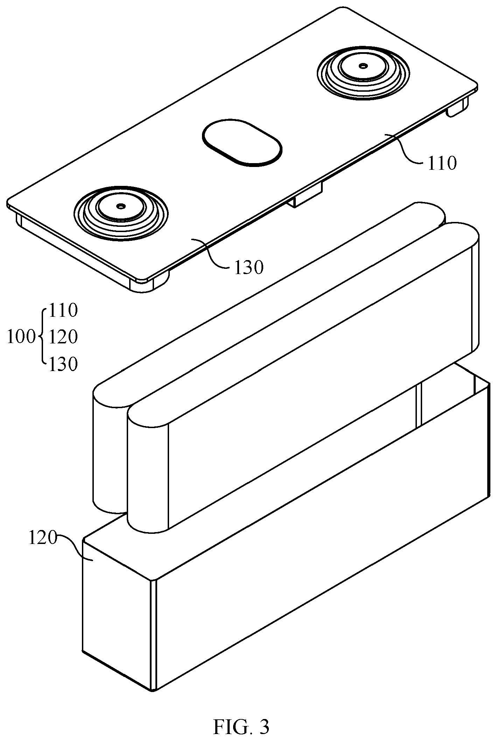

Referring to FIG. 3, FIG. 3 is a schematic exploded structural diagram of a battery cell according to one or more embodiments of the present application.

The battery cell 10 refers to the smallest unit constituting the battery 2. The battery cell 10 may include a housing 100, an electrode assembly, and other functional components. The housing 100 includes an end cover 130 and a housing body 120.

The end cover 130 refers to a component that covers the opening of the housing body 120 to isolate the internal environment of the battery cell 10 from the external environment. Without limitation, the shape of the end cover 130 may be adapted to the shape of the housing body 120 to fit the housing body 120. Optionally, the end cover 130 may be made of a material with certain hardness and strength (such as aluminum alloy). In this way, the end cover 130 is not easily deformed when subjected to extrusion or collision, so that the battery cell 10 can have higher structural strength and the safety performance can also be improved. Functional components such as electrode terminals may be provided on the end cover 130. The electrode terminals may be used to electrically connect with the electrode assembly to output or input the electrical energy of the battery cell 10. In some embodiments, the electrode terminals may include poles. The poles may include a positive electrode pole and a negative electrode pole for outputting current and connecting with external circuits. In some embodiments, the end cover 130 may also be provided with an explosion-proof member for releasing internal pressure when the internal pressure or temperature of the battery cell 10 reaches a threshold value. The material of the end cover 130 may also be various, such as copper, iron, aluminum, stainless steel, aluminum alloy, or plastic. The embodiments of the present application do not impose special restrictions on this. In some embodiments, an insulating member may also be provided on the inner side of the end cover 130. The insulating member may be used to isolate the electrical connection components in the housing body 120 from the end cover 130 to reduce the risk of short circuit. Exemplarily, the insulating member may be plastic, rubber, or the like.

The housing body 120 is a component used to cooperate with the end cover 130 to form the internal environment of the battery cell 10, where the formed internal environment can be used to accommodate the electrode assembly, electrolyte, and other components. The housing body 120 and the end cover 130 may be independent components. An opening may be provided on the housing body 120, and the end cover 130 is used to cover the opening to form the internal environment of the battery cell 10. Without limitation, the end cover 130 and the housing body 120 may also be integrated. Specifically, the end cover 130 and the housing body 120 may first form a common connection surface before other components are placed into the housing body. When it is necessary to encapsulate the interior of the housing body 120, the end cover 130 is then used to cover the housing body 120. The housing body 120 may have various shapes and various sizes, such as rectangular, cylindrical, and hexagonal prism. Specifically, the shape of the housing body 120 may be determined according to the specific shape and size of the electrode assembly. The material of the housing body 120 may be various, such as copper, iron, aluminum, stainless steel, aluminum alloy, or plastic. The embodiments of the present application do not impose special restrictions on this.

The electrode assembly is the component in the battery cell 10 where electrochemical reactions occur. The housing body 120 may contain one or more electrode assemblies. The electrode assembly is mainly formed by winding or stacking a positive electrode sheet and a negative electrode sheet, and a separator is usually provided between the positive electrode sheet and the negative electrode sheet. The parts of the positive electrode sheet and the negative electrode sheet that have active substances constitute the main body portion of the electrode assembly. The parts of the positive electrode sheet and the negative electrode sheet that do not have active substances respectively constitute tabs. The positive electrode tab and the negative electrode tab may be located together at one end of the main body portion or respectively at both ends of the main body portion. During the charging and discharging process of the battery, the positive electrode active substance and the negative electrode active substance react with the electrolyte, and the tabs are connected to the electrode terminals to form a current loop.

In some embodiments, the electrode assembly includes a positive electrode, a negative electrode, and a separator. During the charging and discharging process of the battery cell 10, active ions (such as lithium ions) are intercalated and deintercalated back and forth between the positive electrode and the negative electrode. The separator is disposed between the positive electrode and the negative electrode, which can prevent the positive and negative electrodes from short-circuiting and allow active ions to pass through.

In some embodiments, the positive electrode may be a positive electrode sheet. The positive electrode sheet may include a positive electrode current collector and a positive electrode active material disposed on at least one surface of the positive electrode current collector.

As an example, the positive electrode current collector has two surfaces opposite in its own thickness direction, and the positive electrode active material is disposed on either or both of the two opposite surfaces of the positive electrode current collector.

As an example, the positive electrode current collector may be a metal foil or a composite current collector. For example, as a metal foil, silver surface-treated aluminum or stainless steel, stainless steel, copper, aluminum, nickel, carbon electrode, carbon, nickel, titanium, or the like may be used. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

As an example, the positive electrode active material may include at least one of the following materials: lithium-containing phosphate, lithium transition metal oxide, and their respective modified compounds. However, the present application is not limited to these materials, and other conventional materials that can be used as positive electrode active materials for batteries may also be used. These positive electrode active materials may be used alone or in combination of two or more. Examples of lithium-containing phosphates may include, but are not limited to, at least one of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon. Examples of lithium transition metal oxides may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds.

In some embodiments, the negative electrode may be a negative electrode sheet. The negative electrode sheet may include a negative electrode current collector.

As an example, the negative electrode current collector may be a metal foil, a metal foam, or a composite current collector. For example, as a metal foil, silver surface-treated aluminum or stainless steel, stainless steel, copper, aluminum, nickel, carbon electrode, carbon, nickel, or titanium may be used. The metal foam may be nickel foam, copper foam, aluminum foam, alloy foam, carbon foam, or the like. The composite current collector may include a polymer material substrate and a metal layer. The composite current collector may be formed by forming a metal material (copper, copper alloy, nickel, nickel alloy, titanium, titanium alloy, silver, silver alloy, and the like) on a polymer material substrate (such as a substrate of polypropylene, polyethylene terephthalate, polybutylene terephthalate, polystyrene, or polyethylene).

As an example, the negative electrode sheet may include a negative electrode current collector and a negative electrode active material disposed on at least one surface of the negative electrode current collector.

As an example, the negative electrode current collector has two surfaces opposite in its own thickness direction, and the negative electrode active material is disposed on either or both of the two opposite surfaces of the negative electrode current collector.

As an example, the negative electrode active material may be a negative electrode active material for a battery cell 10 known in the art. As an example, the negative electrode active material may include at least one of the following materials: artificial graphite, natural graphite, soft carbon, hard carbon, silicon-based materials, tin-based materials, and lithium titanate. The silicon-based material may be selected from at least one of elemental silicon, silicon oxide, silicon-carbon composite, silicon-nitrogen composite, and silicon alloy. The tin-based material may be selected from at least one of elemental tin, tin oxide, and tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the separator is a separating film. The present application does not have special restrictions on the type of separating film, and any known porous-structure separating film with good chemical stability and mechanical stability may be selected.

As an example, the main material of the separating film may be selected from at least one of glass fiber, non-woven fabric, polyethylene, polypropylene, polyvinylidene fluoride, and ceramic. The separating film may be a single-layer film or a multi-layer composite film, and there is no special restriction. When the separating film is a multi-layer composite film, the materials of various layers may be the same or different, and there is no special restriction. The separator may be a single component located between the positive and negative electrodes, or may be attached to the surface of the positive and negative electrodes.

In some embodiments, the separator is a solid electrolyte. The solid electrolyte is disposed between the positive electrode and the negative electrode, and simultaneously plays the role of transmitting ions and isolating the positive and negative electrodes.

In some embodiments, the battery cell 10 further includes an electrolyte. The electrolyte plays the role of conducting ions between the positive and negative electrodes. The present application does not have specific restrictions on the type of electrolyte, which can be selected according to needs. The electrolyte may be liquid, gel, or solid.

The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from ether solvents. Ether solvents may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

The gel electrolyte includes a polymer as the backbone network of the electrolyte, combined with an ionic liquid-lithium salt.

The solid electrolyte includes a polymer solid electrolyte, an inorganic solid electrolyte, and a composite solid electrolyte.

As an example, the polymer solid electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid electrolyte may be one or more of oxide solid electrolytes (crystalline perovskite, sodium superionic conductor, garnet, and amorphous LiPON film), sulfide solid electrolytes (crystalline lithium superionic conductor (lithium germanium phosphorus sulfide, and argyrodite), amorphous sulfide), halide solid electrolytes, nitride solid electrolytes, and hydride solid electrolytes.

As an example, the composite solid electrolyte is formed by adding inorganic solid electrolyte fillers to a polymer solid electrolyte.

During use of a battery, it is necessary to collect and monitor the working state of the battery through a detection element. However, the existing battery detection element has a complex structure and poor reliability, and it is difficult to transmit the collected battery data.

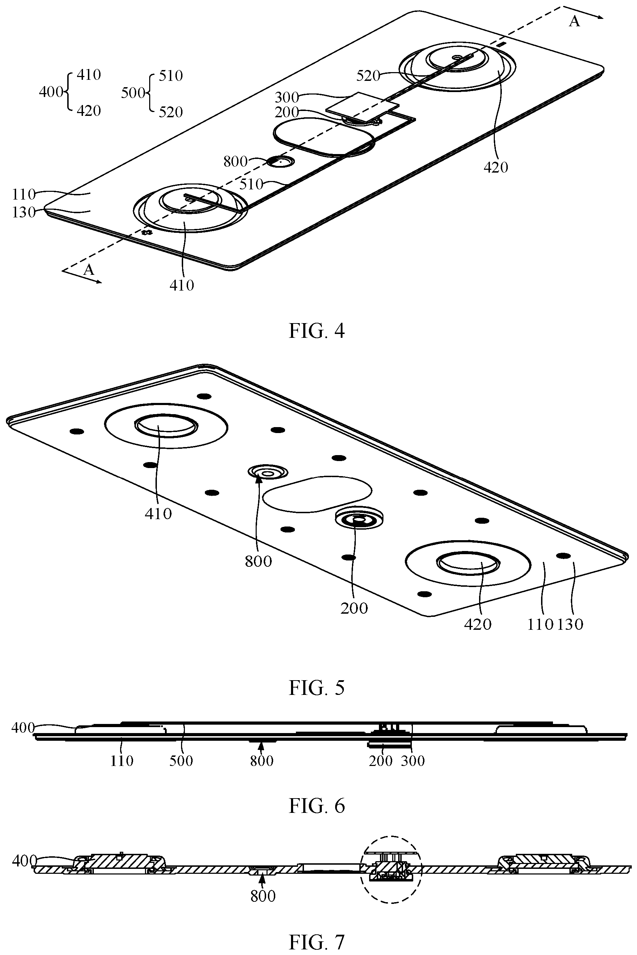

Referring to FIG. 4, FIG. 4 is a schematic partial structural diagram of a battery cell from a first perspective according to one or more embodiments of the present application.

The battery cell 10 includes a housing 100, a detection element 200, and a transmission element 300. The housing 100 includes a wall portion 110. The detection element 200 runs through the wall portion 110. The detection element 200 is exposed in the housing 100 and outside the housing 100. The detection element 200 is configured to collect battery data. The transmission element 300 is located outside the housing 100. The transmission element 300 is connected to the detection element 200. The transmission element 300 is configured to receive and transmit the battery data.

The housing 100 can serve as a carrier for the detection element 200 and the transmission element 300, so that the detection element 200 and the transmission element 300 are directly or indirectly kept relatively fixed with the housing 100. The housing 100 can isolate the internal environment of the battery cell 10 from the external environment. The housing 100 can have certain hardness and strength, so that the housing 100 is not easily deformed when subjected to extrusion or collision, thereby improving the safety performance of the battery cell 10. The housing 100 can have any shape. For example, the shape of the housing 100 includes, but is not limited to, square, cylindrical, and prismatic. The housing 100 can be an internal hollow structure. The interior of the housing 100 can be used to accommodate objects such as electrode assemblies and electrolyte. The housing 100 includes a wall portion 110. The wall portion 110 can be any side wall of the housing 100. Exemplarily, when the housing 100 is square, the parts corresponding to the six side surfaces of the square housing 100 can all be used as the wall portion 110 of this embodiment.

The detection element 200 may refer to a device that collects battery data of the battery cell 10, that is, a device that can receive battery data on the battery cell 10 and has functions of storing and processing the battery data. The battery data includes status signals, where the status signal refers to status information manifested on the battery cell 10, such as temperature signals, voltage signals, and pressure signals on the battery cell 10. The detection element 200 can detect one or more of various status signals of the battery cell 10. The detection element 200 runs through the wall portion 110. The detection element 200 can be at least partially exposed in the housing 100, thereby facilitating the detection and collection of status signals inside the battery cell 10. The detection element 200 can also be at least partially exposed outside the housing 100, thereby facilitating the connection between the detection element 200 and the transmission element 300, where the transmission element 300 is located outside the housing 100.

The transmission element 300 can receive the battery data detected by the detection element 200 and can transmit the detected battery data. The transmission element 300 may include, but is not limited to, a wireless transmission module. When the transmission element 300 is a wireless transmission module, the transmission element 300 can transmit the battery data by means of power carrier transmission or the like. In some application scenarios, the transmission element 300 can transmit the battery data to a battery management system. Exemplarily, the battery cell 10 can be connected to the battery management system through a direct current bus. The transmission element 300 can couple the signal of the battery data received from the detection element 200 to the current of the cell, and then transmit it to the battery management system through the direct current bus.

Through the above embodiments, the detection element 200 runs through the wall portion 110. The detection element 200 is exposed in the housing 100 to help the detection element 200 to collect battery data. The detection element 200 is also exposed outside the housing 100 to facilitate the connection between the detection element 200 and the transmission element 300, thereby helping the transmission element 300 to transmit the battery data collected by the detection element 200.

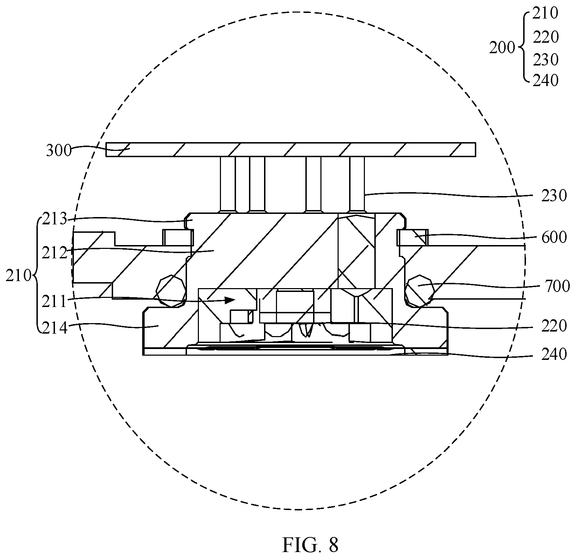

Referring to FIGs. 5 to 8, FIG. 5 is a schematic partial structural diagram of a battery cell from a second perspective according to one or more embodiments of the present application; FIG. 6 is a schematic partial structural diagram of a battery cell from a third perspective according to one or more embodiments of the present application; FIG. 7 is a cross-sectional view of the schematic partial structural diagram of the battery cell shown in FIG. 4 taken along A-A direction; and FIG. 8 is an enlarged schematic diagram of a structure within a dashed box in the cross-sectional view shown in FIG. 7.

The battery cell 10 further includes a pole 400 disposed on the wall portion 110. Both the detection element 200 and the transmission element 300 are electrically connected to the pole 400. The pole 400 may include two poles 400 with opposite polarities. Exemplarily, the pole 400 may be a positive electrode pole 400 and a negative electrode pole 400. The detection element 200 and the transmission element 300 may be electrically connected to the positive electrode pole 400 and the negative electrode pole 400. The battery cell 10 can supply power to the detection element 200 and the transmission element 300 through the pole 400. In some application scenarios, the transmission element 300 can also perform signal coupling on the current of the cell of the battery cell 10 through the pole 400, thereby helping the transmission element 300 to transmit battery data. Thus, the pole 400 can supply power to the detection element 200 and the transmission element 300 without the need for external power supply, thereby reducing the complexity of the power supply mode.

In some embodiments, the battery cell 10 further includes a wire 500. The transmission element 300 is electrically connected to the pole 400 through the wire 500. The transmission element 300 is electrically connected to the detection element 200. The wire 500 can facilitate electrical conduction between the transmission element 300 and the pole 400, thereby helping the pole 400 to provide power to the transmission element 300 through the wire 500. The transmission element 300 is electrically connected to the detection element 200. It can be understood that the transmission element 300 is electrically connected to the pole 400 through the wire 500, and at the same time the transmission element 300 is electrically connected to the detection element 200, which can help the pole 400 to supply power to the detection element 200 through the wire 500 and the transmission element 300. Thus, the pole 400 can supply power to the transmission element 300 through the wire 500 and supply power to the detection element 200 through the transmission element 300, thereby reducing the complexity of the wire harness.

In some embodiments, the pole 400 includes a first pole 410 and a second pole 420 with opposite polarities. The first pole 410 and the second pole 420 are spaced apart. The wire 500 includes a first wire 510 and a second wire 520. The first wire 510 connects the transmission element 300 and the first pole 410. The second wire 520 connects the transmission element 300 and the second pole 420. The first pole 410 may be any one of the positive electrode pole 400 and the negative electrode pole 400, and the second pole 420 is the other of the positive electrode pole 400 and the negative electrode pole 400. Exemplarily, when the first pole 410 is the positive electrode pole 400, the second pole 420 may be the negative electrode pole 400; or when the first pole 410 is the negative electrode pole 400, the second pole 420 may be the positive electrode pole 400. Thus, it is convenient for the first pole 410 and the second pole 420 to supply power to the transmission element 300 through the first wire 510 and the second wire 520, which reduces the complexity of the wire harness.

In some embodiments, the detection element 200 and the transmission element 300 are located between the first pole 410 and the second pole 420. Exemplarily, the first pole 410 and the second pole 420 may be the positive electrode pole 400 and the negative electrode pole 400, respectively. One or both of the detection element 200 and the transmission element 300 may be closer to the positive electrode pole 400; or one or both of the detection element 200 and the transmission element 300 may be closer to the negative electrode pole 400; or the geometric center of one or both of the detection element 200 and the transmission element 300 may also be located at the midpoint between the positive electrode pole 400 and the negative electrode pole 400. Thus, the extension length of the first wire 510 and the second wire 520 can be reduced, production costs can be reduced, and the complexity of the wire harness can be reduced.

In some embodiments, a height by which the detection element 200 protrudes from the wall portion 110 outside the housing 100 is lower than a height by which the pole 400 protrudes from the wall portion 110 outside the housing 100. It can be understood that the distance from the end of the detection element 200 away from the wall portion 110 to the wall portion 110 is smaller than the distance from the end of the pole 400 away from the wall portion 110 to the wall portion 110. In some other embodiments, the height by which the detection element 200 protrudes from the wall portion 110 outside the housing 100 may also be equal to the height by which the pole 400 protrudes from the wall portion 110 outside the housing 100. Thus, it is convenient to reduce the overall size of the battery cell 10, reduce the influence of the detection element 200 on the interaction between the battery cell 10 and other components, and enable the battery cell 10 to be adapted to more application scenarios.

In some embodiments, the detection element 200 includes a mounting shell 210 and a sensor 220. The mounting shell 210 runs through the wall portion 110. The sensor 220 is mounted in the mounting shell 210. The mounting shell 210 can have certain strength, thereby protecting the sensor 220. In some application scenarios, the wall portion 110 may be provided with a mounting hole enabling communication between the inside of the housing 100 and the outside of the housing 100. The mounting shell 210 can run through the wall portion 110 through the mounting hole on the wall portion 110. It can be understood that when the mounting shell 210 is mounted in the mounting hole, the mounting shell 210 can also block the mounting hole, thereby isolating the internal environment of the housing 100 from the external environment of the housing 100. The material of the sensor 220 may include, but is not limited to, stainless steel. The sensor 220 is mounted in the mounting shell 210. The sensor 220 can be mounted on the part of the mounting shell 210 in the housing 100, thereby detecting the status signals inside the battery cell 10.

In some embodiments, the detection element 200 includes a conductive member 230. The conductive member 230 is connected to the side of the mounting shell 210 facing the outside of the housing 100. The transmission element 300 is connected to the conductive member 230. The conductive member 230 can be made of a conductive material. The conductive member 230 is connected to the side of the mounting shell 210 facing the outside of the housing 100 and is connected to the transmission element 300, thereby helping the transmission element 300 to supply power to the detection element 200 through the conductive member 230. There may be various connection methods between the transmission element 300 and the conductive member 230, for example, the connection between the two may be crimping, welding, plugging, bolt connection, or winding. In some application scenarios, the conductive member 230 may be a conductive post. The number of conductive posts may be multiple. The transmission element 300 may be inserted into the conductive posts. Thus, by mounting the sensor 220 into the mounting shell 210, the mounting shell 210 can provide better protection for the sensor 220. The detection element 200 can run through the wall portion 110 via the mounting shell 210, thereby improving the stability of the mounting of the detection element 200. The detection element 200 can collect battery data through the sensor 220 and be electrically connected to the transmission element 300 through the conductive member 230, thereby improving the stability of the connection between the detection element 200 and the transmission element 300.

In some embodiments, the mounting shell 210 has an accommodating groove 211. The notch of the accommodating groove 211 faces the inside of the housing 100. The sensor 220 is located in the accommodating groove 211. The detection element 200 further includes a diaphragm 240. The diaphragm 240 blocks the notch of the accommodating groove 211. The shape of the accommodating groove 211 can match the shape of the sensor 220 so that the sensor 220 can be mounted in the accommodating groove 211. The shape of the diaphragm 240 can also match the shape of the notch of the accommodating groove 211. The notch of the accommodating groove 211 faces the inside of the housing 100. The diaphragm 240 can block the notch of the accommodating groove 211, so that the sensor 220 can be carried by the diaphragm 240 and mounted in the accommodating groove 211. Optionally, the diaphragm 240 can be made of a material with certain strength, thereby improving the safety of the sensor 220. Exemplarily, the material of the diaphragm 240 may include, but is not limited to, stainless steel. Thus, the cooperation of the accommodating groove 211 and the diaphragm 240 can provide support for the sensor 220. At the same time, the accommodating groove 211 and the diaphragm 240 can protect the sensor 220, thereby reducing the risk of damage to the sensor 220.

In some embodiments, the sensor 220 includes a temperature sensor 220 and/or a pressure sensor 220. The temperature sensor 220 can be used to detect temperature data of the battery cell 10. The pressure sensor 220 can be used to detect pressure data of the battery cell 10. The sensor 220 may include one or both of the temperature sensor 220 and the pressure sensor 220. Thus, the temperature and/or pressure data of the battery cell 10 can be detected through the sensor 220.

In some embodiments, the mounting shell 210 includes a main body portion 212 and a first flange portion 213. The main body portion 212 runs through the wall portion 110. The first flange portion 213 is located outside the housing 100 and is connected to the main body portion 212. The first flange portion 213 is spaced apart from the wall portion 110. The battery cell 10 further includes a buckle member 600. The radial dimension of the first flange portion 213 is larger than the radial dimension of the main body portion 212. The buckle member 600 is clamped between the first flange portion 213 and the wall portion 110. Exemplarily, the mounting shell 210 can run through the wall portion 110 through a mounting hole. The radial dimension of the main body portion 212 can match the radial dimension of the mounting hole. The radial dimension of the first flange portion 213 is larger than the radial dimension of the main body portion 212, so that the first flange portion 213 is difficult to enter the interior of the battery cell 10 through the mounting hole. The buckle member 600 is clamped between the first flange portion 213 and the wall portion 110, so that the first flange portion 213 does not directly contact the wall portion 110, thereby alleviating the risk of damage to the wall portion 110 caused by the first flange portion 213 squeezing the wall portion 110. The first flange portion 213 cooperates with the buckle member 600 to help the mounting shell 210 to be partially clamped outside the housing 100. Thus, the first flange portion 213 can be clamped to the wall portion 110 through the buckle member 600, and it is convenient to disassemble the main body portion 212 and the wall portion 110, thereby helping the main body portion 212 to run through the wall portion 110 and improving the stability of the mounting and fixation of the main body portion 212 and the wall portion 110.

In some embodiments, the mounting shell 210 includes a second flange portion 214. The second flange portion 214 is in the housing 100 and is connected to the main body portion 212. The radial dimension of the second flange portion 214 is larger than the radial dimension of the main body portion 212. The second flange portion 214 abuts against the wall portion 110. Exemplarily, the mounting shell 210 can run through the wall portion 110 through a mounting hole. The radial dimension of the main body portion 212 can match the radial dimension of the mounting hole. The radial dimension of the second flange portion 214 is larger than the radial dimension of the main body portion 212, so that the second flange portion 214 is difficult to exit the interior of the battery cell 10 through the mounting hole. The second flange portion 214 abuts against the wall portion 110, making the connection between the mounting shell 210 and the wall portion 110 tighter, improving the air tightness of the mounting shell 210, isolating the internal environment of the battery cell 10 from the external environment, and reducing the risk of leakage of electrolyte and the like inside the battery cell 10 through the place where the mounting shell 210 runs through the wall portion 110. Thus, the second flange portion 214 can be clamped to the side of the wall portion 110 close to the inside of the housing 100, further improving the stability of the mounting and fixation of the main body portion 212 and the wall portion 110.

In some embodiments, the battery cell 10 further includes a sealing ring 700. The sealing ring 700 surrounds the main body portion 212. The sealing ring 700 is sandwiched between the wall portion 110 and the second flange portion 214. The sealing ring 700 may be annular. The sealing ring 700 can be used to seal the gap between the wall portion 110 and the second flange portion 214 to reduce the risk of communication between the internal environment and the external environment of the battery cell 10. The sealing ring 700 can have certain elasticity so that when the sealing ring 700 is sandwiched between the wall portion 110 and the second flange portion 214, it fits more closely with the wall portion 110 and the second flange portion 214, thereby reducing the risk of communication between the internal environment and the external environment of the battery cell 10. Thus, the sealing ring 700 can seal the space between the wall portion 110 and the second flange portion 214, isolating the internal environment of the battery cell 10 from the external environment.

In some embodiments, the housing 100 includes a housing body 120 and an end cover 130. The end cover 130 covers an open end of the housing body 120. The detection element 200 runs through the end cover 130. The end cover 130 refers to a component that covers the opening of the housing body 120 to isolate the internal environment of the battery cell 10 from the external environment. Without limitation, the shape of the end cover 130 may be adapted to the shape of the housing body 120 to fit the housing body 120. Optionally, the end cover 130 may be made of a material with certain hardness and strength (such as aluminum alloy). In this way, the end cover 130 is not easily deformed when subjected to extrusion or collision, so that the battery cell 10 can have higher structural strength and the safety performance can also be improved. Functional components such as electrode terminals may be provided on the end cover 130. The electrode terminals may be used to electrically connect with the electrode assembly to output or input the electrical energy of the battery cell 10. In some embodiments, the electrode terminals may include a pole 400. The pole 400 may include a positive electrode pole 400 and a negative electrode pole 400 for outputting current and connecting with external circuits. The material of the end cover 130 may also be various, such as copper, iron, aluminum, stainless steel, aluminum alloy, or plastic. The embodiments of the present application do not impose special restrictions on this. The housing body 120 is a component used to cooperate with the end cover 130 to form the internal environment of the battery cell 10, where the formed internal environment can be used to accommodate the electrode assembly, electrolyte, and other components. The housing body 120 and the end cover 130 may be independent components. An opening may be provided on the housing body 120, and the end cover 130 is used to cover the opening to form the internal environment of the battery cell 10. Without limitation, the end cover 130 and the housing body 120 may also be integrated. Specifically, the end cover 130 and the housing body 120 may first form a common connection surface before other components are placed into the housing body. When it is necessary to encapsulate the interior of the housing body 120, the end cover 130 is then used to cover the housing body 120. The housing body 120 may have various shapes and various sizes, such as rectangular, cylindrical, and hexagonal prism. Specifically, the shape of the housing body 120 may be determined according to the specific shape and size of the electrode assembly. The material of the housing body 120 may be various, such as copper, iron, aluminum, stainless steel, aluminum alloy, or plastic. Thus, the end cover 130 can cooperate with the housing body 120 to isolate the internal environment of the battery cell 10 from the external environment. At the same time, the detection element 200 runs through the end cover 130, which facilitates the mounting and fixation of the detection element 200.

In some embodiments, the end cover 130 is provided with an electrolyte injection hole 800. The electrolyte injection hole 800 is spaced apart from the detection element 200. The electrolyte injection hole 800 can be understood as a through hole penetrating the end cover 130. During the production process of the battery cell 10, electrolyte can be injected into the interior of the housing 100 through the electrolyte injection hole 800. The electrolyte injection hole 800 is spaced apart from the detection element 200, which reduces the risk of interference between the electrolyte injection hole 800 and the detection element 200 leading to a decrease in the sealing performance of the battery cell 10. Thus, electrolyte can be injected into the battery cell 10 through the electrolyte injection hole 800, facilitating the replenishment of electrolyte into the interior of the housing 100.

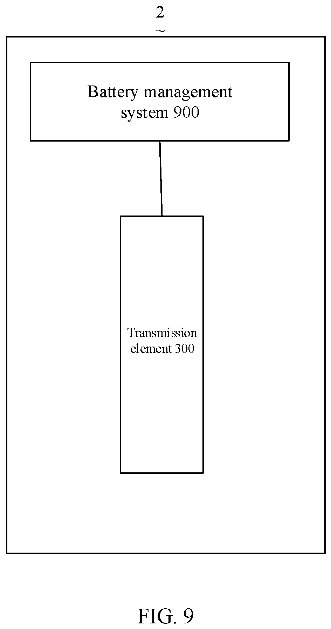

Referring to FIG. 9, FIG. 9 is a schematic structural diagram of a battery according to one or more embodiments of the present application.

In some embodiments, the battery 2 includes a battery management system 900. The battery management system 900 is in communication connection with the transmission element 300. The battery management system 900 (Battery Management System, BMS) can have a great impact on the safe operation of the entire electric vehicle, the selection of vehicle control strategies, the selection of charging modes, and operating costs. Whether during vehicle operation or during charging, the battery management system 900 must complete real-time monitoring and fault diagnosis of the state of the battery system, and inform the vehicle controller or charger through the bus, so as to adopt reasonable control strategies to achieve the purpose of effective and efficient use of the battery system. In this embodiment, the battery management system 900 can be in communication connection with the transmission element 300, so as to monitor the states of cell voltage, temperature, and module current of multiple battery cells 10 simultaneously through the battery management system 900, and perform battery balancing control, fault diagnosis, and the like. Thus, the battery management system 900 can provide control signals for the transmission element 300 and the detection element 200, so that the detection element 200 can detect the state of the battery cell 10, and the working state of the battery cell 10 can be managed in a targeted manner according to the battery data transmitted by the transmission element 300.

In summary, the battery cell 10 provided by the present application includes a housing 100, a detection element 200, and a transmission element 300. The housing 100 includes a wall portion 110. The detection element 200 includes a mounting shell 210 and a sensor 220. The mounting shell 210 runs through the wall portion 110. The sensor 220 is mounted in the mounting shell 210. The sensor 220 is configured to collect battery data. The transmission element 300 is located outside the housing 100. The transmission element 300 is connected to the detection element 200. The transmission element 300 is configured to receive and transmit the battery data. Thus, the detection element 200 runs through the wall portion 110. The detection element 200 is exposed in the housing 100 to help the detection element 200 to collect battery data. The detection element 200 is also exposed outside the housing 100 to facilitate the connection between the detection element 200 and the transmission element 300, thereby helping the transmission element 300 to transmit the battery data collected by the detection element 200. Compared with other types of battery cells, the battery cell 10 of the present application has a simple structure and achieves more convenient transmission of battery data.

Finally, it should be noted that the above embodiments are only used to illustrate the technical solutions of the present application, rather than to limit it. Although the present application has been described in detail with reference to the foregoing embodiments, those of ordinary skill in the art should understand that they can still modify the technical solutions recorded in the foregoing embodiments, or equivalently replace some or all of the technical features therein. However, these modifications or replacements do not cause the essence of the corresponding technical solutions to deviate from the scope of the technical solutions of the embodiments of the present application, and they should all be covered by the scope of the claims and the description of the present application. In particular, as long as there is no structural conflict, the technical features mentioned in each embodiment can be combined in any manner. The present application is not limited to the specific embodiments disclosed herein, but includes all technical solutions falling within the scope of the claims.

## Claims

1. A battery cell, **characterized in that** the battery cell comprises:
a housing comprising a wall portion;
a detection element comprising a mounting shell and a sensor, wherein the mounting shell runs through the wall portion, the sensor is mounted in the mounting shell, and the sensor is configured to collect battery data; and
a transmission element located outside the housing, wherein the transmission element is connected to the detection element, and the transmission element is configured to receive and transmit the battery data.

2. The battery cell according to claim 1, **characterized in that** the battery cell further comprises a pole disposed on the wall portion, and both the detection element and the transmission element are electrically connected to the pole.

3. The battery cell according to claim 2, **characterized in that** the battery cell further comprises a wire, the transmission element is electrically connected to the pole through the wire, and the transmission element is electrically connected to the detection element.

4. The battery cell according to claim 3, **characterized in that** the pole comprises a first pole and a second pole with opposite polarities, the first pole and the second pole are spaced apart, the wire comprises a first wire and a second wire, the first wire connects the transmission element and the first pole, and the second wire connects the transmission element and the second pole.

5. The battery cell according to claim 4, **characterized in that** the detection element and the transmission element are located between the first pole and the second pole.

6. The battery cell according to claim 2, **characterized in that** a height by which the detection element protrudes from the wall portion outside the housing is lower than a height by which the pole protrudes from the wall portion outside the housing.

7. The battery cell according to any one of claims 1 to 6, **characterized in that** the detection element comprises a conductive member, the conductive member is connected to a side of the mounting shell facing the outside of the housing, and the transmission element is connected to the conductive member.

8. The battery cell according to claim 7, **characterized in that** the mounting shell has an accommodating groove, a notch of the accommodating groove faces the inside of the housing, the sensor is located in the accommodating groove, the detection element further comprises a diaphragm, and the diaphragm blocks the notch of the accommodating groove.

9. The battery cell according to claim 7, **characterized in that** the sensor comprises a temperature sensor and/or a pressure sensor.

10. The battery cell according to claim 7, **characterized in that** the mounting shell comprises a main body portion and a first flange portion, the main body portion runs through the wall portion, the first flange portion is located outside the housing and is connected to the main body portion, the first flange portion is spaced apart from the wall portion, the battery cell further comprises a buckle member, a radial dimension of the first flange portion is larger than a radial dimension of the main body portion, and the buckle member is clamped between the first flange portion and the wall portion.

11. The battery cell according to claim 10, **characterized in that** the mounting shell comprises a second flange portion, the second flange portion is in the housing and is connected to the main body portion, a radial dimension of the second flange portion is larger than a radial dimension of the main body portion, and the second flange portion abuts against the wall portion.

12. The battery cell according to claim 11, **characterized in that** the battery cell further comprises a sealing ring, the sealing ring surrounds the main body portion, and the sealing ring is sandwiched between the wall portion and the second flange portion.

13. The battery cell according to any one of claims 1 to 6, **characterized in that** the housing comprises a housing body and an end cover, the end cover covers an open end of the housing body, and the detection element runs through the end cover.

14. The battery cell according to claim 13, **characterized in that** the end cover is provided with an electrolyte injection hole, and the electrolyte injection hole is spaced apart from the detection element.

15. A battery, **characterized in that** the battery comprises the battery cell according to any one of claims 1 to 14.

16. The battery according to claim 15, **characterized in that** the battery comprises a battery management system, and the battery management system is in communication connection with the transmission element.

17. An electric apparatus, **characterized in that** the electric apparatus comprises the battery according to claim 15 or 16.
